# EUROPÄISCHE PATENTANMELDUNG

(11) **EP 1 046 538 A2**
(43) Veröffentlichungstag der Anmeldung: **25.10.2000**
(21) Anmeldenummer: 00105624.1
(22) Anmeldetag: 16.03.2000
(51) Int. Cl.: B60N 2/44, B60N 2/66

(54) **Fahrzeugsitz, insbesondere Kraftfahrzeugsitz**

(30) Priorität: 24.04.1999 DE 19918720
(71) Anmelder: Keiper GmbH & Co., 67657 Kaiserslautern (DE)
(72) Erfinder: Maier, Jürgen, 67808 Weitersweiler (DE); Schäfer, Volker, 67731 Otterbach (DE)
(74) Vertreter: Patentanwälte Hosenthien-Held und Dr. Held

(57) **Zusammenfassung**

Bei einem Fahrzeugsitz, insbesondere einem Kraftfahrzeugsitz, weist die Sitzstruktur (1) im Bereich der Rückenlehne (3) ein Modul (5) mit einstellbarer Wölbung als Lordosenstütze auf.

## Beschreibung

Die Erfindung betrifft einen Fahrzeugsitz, insbesondere einen Kraftfahrzeugsitz, mit den Merkmalen des Oberbegriffs des Anspruches 1.

Aus der DE-OS 18 15 856 ist ein Fahrzeugsitz dieser Art bekannt, der am oberen Ende seiner Rückenlehne eine integrierte Kopfstütze aufweist. Zur Einstellung der Kontur oder Wölbung der Kopfstütze wird bei dieser ein Polster aus Schaumstoff mit seiner Oberkante und seiner Unterkante an einem Träger in vertieften Haltepunkten eingehängt. Am Träger sind hierfür mehrere Haltepunkte in verschiedenen Höhen vorgesehen. Der Abstand der ausgewählten Haltepunkte ist kleiner als die Abmessung des Polsters, so daß sich das Polster nach vorne wölbt. Die Stärke und Breite der Wölbung des Polsters ist durch die Auswahl der Haltepunkte einstellbar.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, daß das Modul eine einstellbare Wölbung als Lordosenstütze aufweist, kann das Rückgrat unterstützt werden. Die Wölbung wird vorzugsweise dadurch gebildet, daß ein Lordosenschild des Moduls einer mechanischen Spannung ausgesetzt wird und dann dieser Spannung ausweicht. Eine solche Ausgestaltung bedarf nur weniger Bauteile, ist daher einfach und kostengünstig herzustellen. Außerdem kann eine stufenlose Einstellung der Stärke der Wölbung erreicht werden. Vorzugsweise sind auch Mittel vorgesehen, welche die Wölbung bewegen und dadurch die Höhe der Lordosenstütze einstellen können. Die Form des Lordosenschildes, insbesondere die Länge und Breite, ist in den Grenzen, die durch den Einsatz bei einem Fahrzeugsitz vorgegeben sind, frei wählbar.

In einer bevorzugten Ausführungsform ist das Lordosenschild auf einem Träger des Moduls zwischen zwei äußeren Haltepunkten eingespannt, von denen wenigstens ein Haltepunkt, der beispielsweise durch einen Exzenter gebildet wird, beweglich ist und der andere Haltepunkt, der beispielsweise durch einen Teil des Trägers gebildet wird, fest ist, so daß bei einer Bewegung des beweglichen Haltepunktes das Lordosenschild die Wölbung als Lordosenstütze ausbildet. Vorzugsweise wird das Lordosenschild zwischen den äußeren Haltepunkten von inneren Haltepunkten in Anlage an den Träger gehalten, so daß sich die Wölbung zwischen den inneren Haltepunkten ausbildet. Durch eine Einstellung der Höhe der inneren Haltepunkte kann dann die Wölbung als Ganzes in die gewünschte Höhe bewegt werden. Eine solche Einstellung der Höhe kann beispielsweise durch eine Spindel erfolgen.

In einer weiteren bevorzugten Ausführungsform weist das Modul noch Seitenwangen auf, die zusammen mit der Lordosenstütze die Kontur des Moduls definieren und die vorzugsweise unabhängig voneinander einstellbar sind. Damit umfaßt das Modul alle notwendigen Teile zur Unterstützung des Lendenbereichs des Sitzbenutzers. Das Modul kann daher als gesamte Einheit in die Sitzstruktur eingebaut werden, wobei diese modulare Einheit weitgehend unabhängig vom Sitztyp und deshalb leicht austauschbar und in verschiedene Sitztypen einsetzbar ist. Das Modul ist sowohl bei Vordersitzen als auch bei Rücksitzbänken in Kraftfahrzeugen einsetzbar, aber auch bei Fluggastsitzen.

Vorzugsweise ist das Modul federnd in der Sitzstruktur aufgehängt, was einerseits die Austauschbarkeit verbessert, indem unterschiedliche bauliche Abmessungen ausgeglichen werden können, und andererseits auch in orthopädischer Hinsicht für die Unterstützung des Lendenbereichs günstig ist. Um die Anpassung an den Sitzbenutzer zu verbessern, ist die Kontur des Moduls vorzugsweise stufenlos einstellbar, beispielsweise mittels wenigstens eines Motors, der in das Modul integriert ist, und damit optimal anpaßbar. Das Modul kann auch so ausgebildet sein, daß die Kontur manuell einstellbar ist.

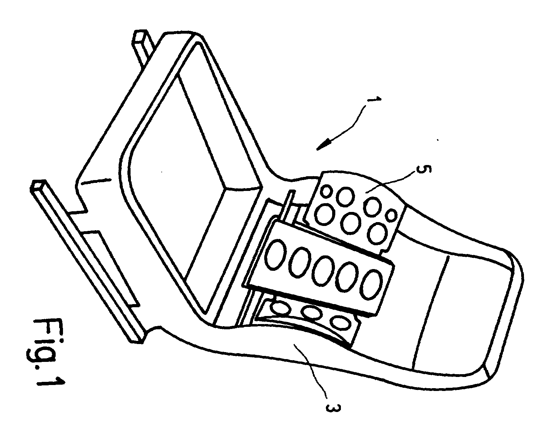

Im folgenden ist die Erfindung anhand eines in der Zeichnung dargestellten Ausführungsbeispiels näher erläutert. Es zeigen
- Fig. 1: eine schematische, perspektivische Ansicht der Sitzstruktur des erfindungsgemäßen Fahrzeugsitzes, bei der nur ein Modul genauer dargestellt ist,

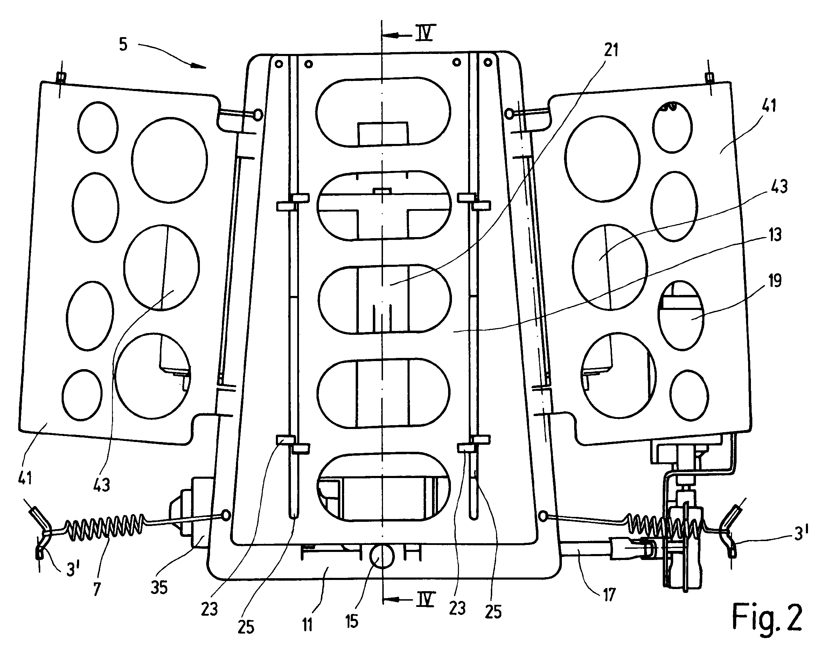

- Fig. 2: die Vorderansicht des Moduls aus Fig. 1,

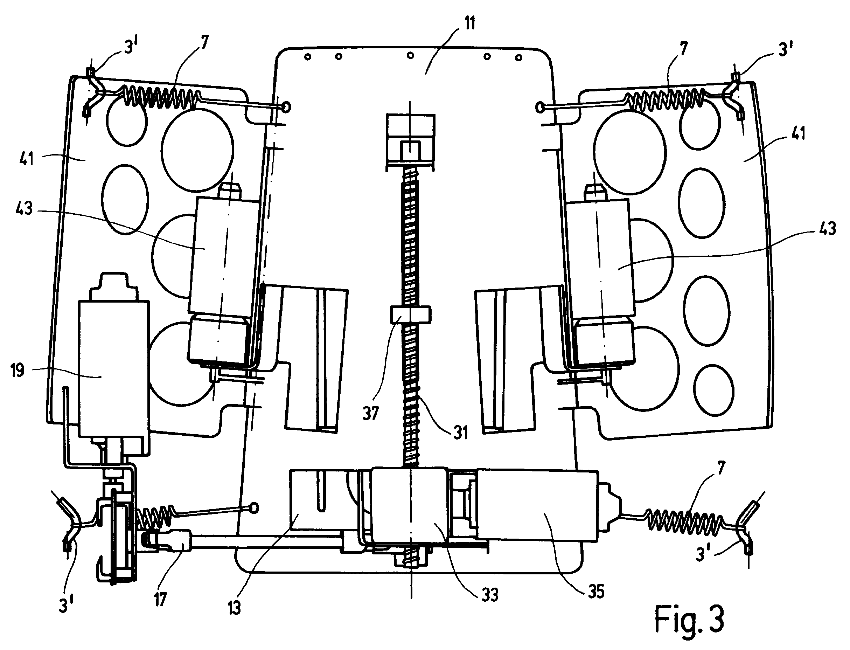

- Fig. 3: die Rückansicht des Moduls aus Fig. 1,

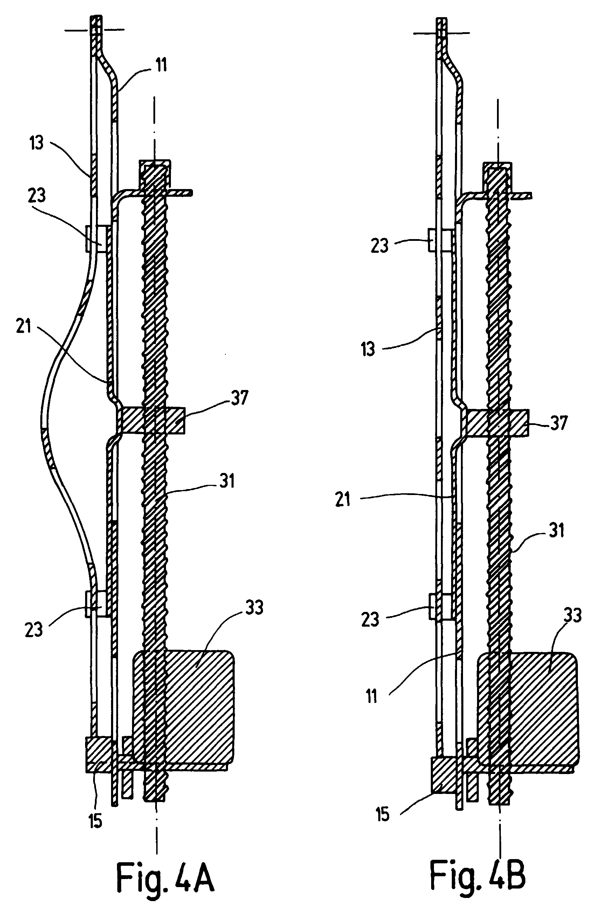

- Fig. 4A: einen Schnitt entlang der Linie IV-IV in Fig. 2, wobei eine Wölbung ausgebildet ist, und
- Fig. 4B: einen Schnitt entlang der Linie IV-IV in Fig. 2, wobei keine Wölbung ausgebildet ist.

Ein Fahrzeugsitz für ein Kraftfahrzeug weist eine Sitzstruktur 1 auf, an deren Lehnenrahmen 3 ein Seitenwangen-Lordosen-Modul, im folgenden nur als Modul 5 bezeichnet, angebracht ist. Die Figuren geben den Zustand vor Anbringung der Polsterung und des Bezuges wieder. Die Anbringung des Moduls 5 erfolgt durch eine federnde Aufhängung mittels vier Zugfedern 7, die symmetrisch jeweils mit ihrem einen Ende an je einer Ecke des Moduls 5 und mit ihrem anderen Ende an einem Haltebügel 3' des Lehnenrahmens 3 eingehängt sind. Das Modul 5 ist in Fahrtrichtung nach vorne gewandt am Lehnenrahmen 3 in der Höhe angebracht, in der nach Aufbringung der Polsterung der Lendenbereich des Sitzbenutzers zu liegen kommt.

Das Modul 5 umfaßt eine trapezförmige, in der vom Lehnenrahmen 3 aufgespannten Ebene, also aufrecht, hängende Trägerplatte 11 als Träger, an deren Ecken die vorstehend genannten Zugfedern 7 in Bohrungen eingehängt sind. Der Abstand zwischen den parallelen Basisseiten der Trägerplatte 11 ist größer als der mittlere Abstand zwischen ihren Schenkeln. Die Richtung, welche die senkrechte Verbindungslinie zwischen den Basisseiten bildet, ist daher im folgenden als Längsrichtung bezeichnet. Am oberen Rand der Trägerplatte 11 ist auf deren Vorderseite ein Lordosenschild 13 befestigt, welches zum unteren Rand der Trägerplatte 11 herabhängt. Das Lordosenschild 13 ist ein ungefähr rechteckförmiges, flexibles, aber doch stabiles Kunststoffteil mit fünf größeren Durchbruchsöffnungen, die untereinander angeordnet sind. Der untere Rand des Lordosenschilds 13 liegt am Umfang einer Exzenterscheibe 15 an, deren Drehachse senkrecht zur Trägerplatte 11 verläuft und mittels einer Kardanverbindung 17 an einen ersten Motor 19 angeschlossen ist. Das Lordosenschild 13 ist somit zwischen der Trägerplatte 11 und dem Exzenter 15 als äußere Haltepunkte eingespannt.

Zwischen der Trägerplatte 11 und dem Lordosenschild 13 ist ein Verschiebeelement 21 angeordnet, welches eine Doppel-T-Form aufweist. An jedem der vier Enden des Verschiebeelementes 21 steht nach vorne, also senkrecht zur Doppel-T-Form, ein Fuß 23 mit doppelhakenförmigem Ende ab. Je zwei Füße 23 sind durch einen von oben nach unten durch das Lordosenschild 13 verlaufenden Schlitz 25 gesteckt und hintergreifen das Lordosenschild 13. Das Lordosenschild 13 ist somit durch das

Verschiebeelement 21 zwischen den als innere Haltepunkte wirkenden Füßen 23 eingespannt. Auf der Rückseite der Trägerplatte 11 ist eine von oben nach unten verlaufende Spindel 31 gelagert, die über ein Getriebe 33 an einen zweiten Motor 35 angeschlossen ist. Auf der Spindel 31 ist eine Verstellmutter 37 angeordnet, die durch einen parallel zur Spindel 31 in der Trägerplatte 11 vorgesehenen Schlitz greift und in der Mine des davor angeordneten Verschiebeelementes 21 fest verbunden ist.

Zwei spiegelbildlich ausgebildete Seitenwangen 41 aus Kunststoff mit mehreren Durchbruchsöffnungen sind an der linken bzw. an der rechten Seite der Trägerplatte 11 angelenkt. Die Schwenkachse jeder Seitenwange 41 verläuft entlang des entsprechenden Randes der Trägerplatte 11. Die Seitenwangen 41 sind jeweils mittels eines dritten Motors 43, der über ein Getriebe ein Zahnsegment an der entsprechenden Seitenwange 41 bewegt, unabhängig voneinander relativ zur Trägerplatte 11 verschwenkbar und getrennt einstellbar, können jedoch auch synchron angetrieben werden, in einer abgewandelten Ausführungsform beispielsweise durch einen einzigen Motor 43. In einer weiteren, abgewandelten Ausführungsform können die Seitenwangen 41 fest an der Trägerplatte 11 angebracht sein und zur Einstellung verformbar sein.

Durch die Einstellung der Seitenwangen 41 und des Lordosenschilds 13, welche die Kontur des Moduls 5 definieren, ist diese Kontur einstellbar. Zur Einstellung des Lordosenschilds 13 wird zunächst durch eine Drehung der Exzenterscheibe 15, die stufenlos bis 180° wählbar ist, die Auflage des unteren Randes des Lordosenschilds 13, d.h. der untere Haltepunkt, nach oben verstellt und damit das Lordosenschild 13 in Längsrichtung nach oben gedrückt. Aufgrund der Befestigung am oberen Rand der Trägerplatte 11 und aufgrund der Einspannung durch das Verschiebeelement 21 in der Nähe der Ränder weicht das Lordosenschild 13 der Vorspannung aus. Das Lordosenschild 13 wölbt sich daher zwischen den waagrecht verlaufenden Verbindungslinien der Füße 23 als inneren Haltepunkten nach vorne. Diese Wölbung bildet die Lordosenstütze, welche sich an das Rückgrat des Sitzbenutzers anlegen soll. Die Stärke oder Amplitude der Wölbung (d.h. die Abmessung aus der Ebene des Lehnenrahmens 3 heraus nach vorne) ist bei fester Breite der Wölbung (d.h. der Abmessung in Längsrichtung) bis zu einer von der Geometrie der Exzenterscheibe 15 abhängigen Obergrenze durch eine entsprechende Drehung der Exzenterscheibe 15 einstellbar. Es ändert sich also die effektive Länge der als Lordosenstütze wirksamen Materialpartie des Lordosenschildes 13.

Nun wird über die Drehung der Spindel 31 über die Verstellmutter 37 das Verschiebeelement 21 stufenlos in der Höhe eingestellt. Mit der Verschiebung des Verschiebeelementes 21 verschiebt sich auch die dazwischen befindliche Wölbung des Lordosenschilds 13 in ihrer Längsrichtung bis in die gewünschte Höhe. Die Wölbung behält dabei ihre Form (Amplitude und Breite) bei.

In einer abgewandelten Ausführungsform kann noch der Abstand zwischen den Füßen 23 oder entsprechenden Teilen des Verschiebeelementes 21 geändert werden, so daß die Breite und damit die Form der Wölbung in Längsrichtung einstellbar ist. Ferner ist es auch möglich, an Stelle des Verschiebeelementes 21 einen Rahmen vorzusehen und/oder das gewölbte Lordosenschild 13 als Ganzes in der Höhe zu verschieben.

In einer weiteren, abgewandelten Ausführungsform ist es durch Einsatz eines Schaltgetriebes möglich, die Spindel 31 und die Exzenterscheibe 15 (oder ein entsprechendes Element) mit dem gleichen Motor zu bewegen, allerdings nicht gleichzeitig. Ferner kann statt der Spindel 31 und der Verstellmutter 37 ein aufwickelbares Stahlband vorgesehen sein, welches das Verschiebeelement 21 bewegt.

### Bezugszeichenliste

- 1: Sitzstruktur
- 3: Lehnenrahmen
- 3': Haltebügel
- 5: Modul
- 7: Zugfedern
- 11: Trägerplatte
- 13: Lordosenschild
- 15: Exzenterscheibe
- 17: Kardanverbindung
- 19: erster Motor
- 21: Verschiebeelement
- 23: Füße
- 25: Schlitz
- 31: Spindel
- 33: Getriebe
- 35: zweiter Motor
- 37: Verstellmutter
- 41: Seitenwange
- 43: dritter Motor

## Patentansprüche

1. Fahrzeugsitz, insbesondere Kraftfahrzeugsitz, mit einer Sitzstruktur (1), die im Bereich der Rückenlehne (3) ein einstellbares Modul (5) aufweist, dadurch gekennzeichnet, daß das Modul (5) eine einstellbare Wölbung als Lordosenstütze aufweist.

2. Fahrzeugsitz nach Anspruch 1, dadurch gekennzeichnet, daß das Modul (5) ein Lordosenschild (13) aufweist, welches unter Spannung die Wölbung als Lordosenstütze ausbildet.

3. Fahrzeugsitz nach Anspruch 2, dadurch gekennzeichnet, daß das Lordosenschild (13) auf einem Träger (11) des Moduls (5) zwischen zwei äußeren Haltepunkten eingespannt ist, von denen wenigstens ein Haltepunkt beweglich ist, so daß bei einer Bewegung dieses Haltepunktes das Lordosenschild (13) die Wölbung ausbildet.

4. Fahrzeugsitz nach Anspruch 2 oder 3, dadurch gekennzeichnet, daß die Wölbung in der Höhe einstellbar ist und das Lordosenschild (13) dabei seine Höhe beibehält.

5. Fahrzeugsitz nach Anspruch 3, dadurch gekennzeichnet, daß das Lordosenschild (13) zwischen den äußeren Haltepunkten von inneren Haltepunkten in Anlage an den Träger (11) gehalten wird, so daß sich die Wölbung zwischen den inneren Haltepunkten ausbildet.

6. Fahrzeugsitz nach Anspruch 4 und 5, dadurch gekennzeichnet, daß die Höhe der inneren Haltepunkte relativ zum Lordosenschild (13) einstellbar ist und dadurch die Höhe der Wölbung einstellbar ist.

7. Fahrzeugsitz nach Anspruch 6, dadurch gekennzeichnet, daß die inneren Haltepunkte an einem Verschiebeelement (21) vorgesehen sind, welches mittels einer am Träger (11) gelagerten Spindel (31) in der Höhe einstellbar ist.

8. Fahrzeugsitz nach einem der Ansprüche 1 bis 7, dadurch gekennzeichnet, daß das Modul (5) Seitenwangen (41) aufweist, welche zusammen mit der Lordosenstütze die Kontur definieren.

9. Fahrzeugsitz nach Anspruch 8, dadurch gekennzeichnet, daß die Seitenwangen (41) unabhängig voneinander stufenlos einstellbar sind.

10. Fahrzeugsitz nach Anspruch 8, dadurch gekennzeichnet, daß die Seitenwangen (41) synchron stufenlos einstellbar sind.

11. Fahrzeugsitz nach einem der Ansprüche 1 bis 10, dadurch gekennzeichnet, daß das Modul (5) federnd in der Sitzstruktur (1) aufgehängt ist.

12. Fahrzeugsitz nach einem der Ansprüche 1 bis 11, dadurch gekennzeichnet, daß das Modul (5) wenigstens einen Motor (19, 35, 43) zur stufenlosen Einstellung der Kontur des Moduls (5) aufweist.
